# EUROPEAN PATENT APPLICATION

(11) **EP 3 410 043 A1**
(43) Date of publication of application: **05.12.2018**
(21) Application number: 17173646.5
(22) Date of filing: 31.05.2017
(51) Int. Cl.: F25C 1/22, F25D 3/08, A47J 31/40, A47J 43/046, F25D 31/00

(54) **METHOD FOR PREPARING A COLD BEVERAGE**

(71) Applicant: Nestec S.A., 1800 Vevey (CH)
(72) Inventor: DUBIEF, Flavien, 1424 CHAMPAGNE (CH); JAMOLLI, Kevin, 1052 Le Mont-sur-Lausanne (CH); SCORRANO, Lucio, 1400 Yverdon-les-Bains (CH)
(74) Representative: Ducreux, Marie

(57) **Abstract**

The invention concerns a method for preparing a cold beverage with an apparatus (1) for mixing, storing and drinking a beverage, said apparatus comprising :
- a container body (2), comprising a floor (21) and a sidewall (22) extending upwardly and longitudinally from the floor to an upper edge (221),
- a rotatable mixing device (23) positioned at the floor of the container body,
- a motor (3) cooperating with the mixing device (23) in order to rotate the mixing device around a longitudinal axis XX',
wherein the method comprises the step of :
- introducing at least one liquid beverage ingredient in the container body (2),
- providing a removable lid (5) configured for cooperating with the upper edge (221) of the container body and closing said container, said lid comprising at least one piece of ice (50) extending from the lower surface (51) of the lid,
- closing the container with said lid, the piece of ice extending from the lower surface of the lid inside the container body at a position out of the longitudinal axis XX',
- actuating the motor (3) to rotate the mixing device in the at least one liquid beverage ingredient.

## Description

### Field of the invention

The present invention relates to a device and a method for preparing a cold beverage.

### Background of the invention

It is known to rapidly prepare a beverage by dissolving a soluble beverage powder like instant coffee with hot water in a drinking cup. The soluble beverage is usually dosed from a jar or from a stick and water is heated in a kettle. This preparation is fully convenient and rapid, yet it rarely enables the optimal reconstitution of the beverage.

It has been proposed to improve such a preparation by providing mixing containers. These containers usually consist in a drinking container comprising a stirring device at the bottom of the container and optionally a heater in the floor or sidewalls of the container. The stirring device improves the dissolution of the beverage powder whatever the temperature of the diluent introduced therewith, and eventually enables frothing of the beverage. The heater enables the use of cold diluent and the use of a kettle to heat water is not needed any longer.

With such a device, when a cold beverage has to be prepared, the heater is switched off and water at ambient temperature is used. Yet water at ambient temperature usually presents a temperature of about 20°C. Consequently, the resulting beverage is not really chilled : a temperature inferior to 10°C cannot be obtained.

An object of the present invention is to provide a method to enable the preparation of a cold beverage with an apparatus for mixing, storing and drinking a beverage.

It would be advantageous to produce from water at ambient temperature a final cold beverage presenting a temperature far inferior to the initial ambient temperature.

### Summary of the invention

In a **first** aspect of the invention, there is provided a method for preparing a cold beverage with an apparatus for mixing, storing and drinking a beverage, said apparatus comprising :
- a container body, comprising a floor and a sidewall extending upwardly and longitudinally from the floor to an upper edge,
- a rotatable mixing device positioned at the floor of the container body,
- a motor cooperating with the mixing device in order to rotate the mixing device around a longitudinal axis XX',
wherein the method comprises the step of :
- introducing at least one liquid beverage ingredient in the container body,
- providing a removable lid configured for cooperating with the upper edge of the container body and for closing said container, said lid comprising at least one piece of ice extending from the lower surface of the lid,
- closing the container with said lid, the piece of ice extending from the lower surface of the lid inside the container body at a position out of the longitudinal axis XX',
- actuating the motor to rotate the mixing device in the at least one liquid beverage ingredient.

The apparatus used in the method is configured to enable a consumer to drink a beverage prepared directly from the apparatus. The apparatus is essentially a drinking container like a cup, a glass or a mug.
Accordingly, the apparatus comprises a container body. The container body comprises a floor and a sidewall extending longitudinally and upwardly from the floor to an upper edge. Preferably, the container body presents a circular internal cross section. The container body enables the introduction of beverage ingredients and the preparation of a beverage by mixing said ingredients.
At least one of the beverage ingredients is a liquid, generally an aqueous liquid diluent enabling the dissolution of at least one other soluble beverage ingredient such as a beverage powder or a beverage concentrate.
Generally the container body presents an internal volume configured for preparing a beverage for one person, that is to say the volume of a mug. The container body can present an internal volume of about 300 ml. Such an internal volume enables the preparation of beverages with a volume of about 200 ml since the liquid is able to swirl in the container body during its mixing.

The apparatus comprises a mixing device positioned within the container body. This mixing device is configured for mixing the at least one liquid beverage ingredient introduced in the container body. This mixing device can be a blade, a whipper, a stirrer, a whisk such as a toroidally-shaped wire or any equivalent device configured to agitate a beverage. The mixing device is positioned at the floor of the container body that is to say on or close to the floor of the container body.
Due to the rotation, the mixing device creates a swirl of liquid along the sidewall of the container body.

Generally the mixing device is positioned at the centre of the floor of the container body and accordingly the longitudinal axis XX' of rotation corresponds to the longitudinal axis of the container body, and as a result, the swirl extends around the centre of the container body along the sidewall of the container body.
The mixing device can also be positioned out of the centre of the floor of the container body, yet the swirl still rotates along the sidewall of the container body.

The apparatus comprises a motor to rotate the mixing device.

According to the preferred embodiment, the motor is positioned under the floor of the container body and the motor comprises a drive shaft cooperating directly or indirectly with the mixing device through the floor of the container body.
According to one mode, the mixing device can be mechanically attached or connectable to the shaft of the motor (direct cooperation).
According to another preferred mode, the motor can drive the mixing device through a magnetic drive effect through the floor of the container body (indirect cooperation).
Generally the mixing device comprises a connecting means designed to removably engage with a corresponding positioning means at the floor of container body of the apparatus.
This positioning means enables the correct positioning of the mixing device relatively to the shaft of the motor in order to provide an efficient driving of the mixing device.
Preferably, the mixing device comprises at least one magnetically slaved portion and the motor is arranged to drive the mixing device by generating a rotating magnetic field in the container.
According to this embodiment, preferably the positioning means at the floor of container body is a bump or relief raising from the floor of the container body and the connecting means of the mixing device is a slot designed to engage with said bump or relief.
Generally, the motor for actuating the mixing device, the heating device, the battery for supplying these devices with energy are positioned under the floor of the container body at the bottom of the apparatus.
In an alternative embodiment, some of these features, in particular the motor, can be comprised in a docking station. According to this embodiment, the apparatus can be the assembly of two parts. One upper part is deprived of motor and comprises the container and the mixing device whereas one lower part is a docking station comprising the motor and the energy supply and designed for receiving the container body. The mixing operation happens when the container is received in the docking station only. Once the mixing operation is terminated, the container can be removed from the docking station enabling the user to travel and drink.

In an alternative and less preferred embodiment, the motor can be positioned at the top of the container body, usually in the lid of the apparatus and the motor comprises a drive shaft extending from the lid down to the floor of the container body, the mixing device being positioned at the end of the shaft and close to the floor.

The apparatus comprises a removable lid configured for cooperating with the upper edge of the container body. The lid is removable in order to enable the introduction of the beverage ingredients and the cleaning of the apparatus. Once the lid cooperates with the upper edge, the lid closes the container body hermetically. The lid and the container upper edge can cooperate through screwing means or any other means like raised parts slidably engageable with cooperating slots or cooperating parts engageable by snap fitting.
Usually, the lid comprises one first opening drinking aperture. By opening, it is meant a hole traversing the lid from the bottom to the top and enabling fluid communication between the container body and the atmosphere. This first opening is configured as a beverage outlet. Its function is to enable the customer to sip the beverage. It is usually positioned close to the edge of the lid. It is preferably sufficiently large to dispense a drinking flow of beverage.
The lid can comprise one second opening configured as an air port. Its main function is to enable the introduction of air in the container body to compensate the volume of beverage out, while the consumer drinks. Preferably the second opening presents a small cross section compared to the first opening.
Usually, the lid comprises a member configured for closing or opening the first opening and movable between a first closing position and a second opening position. The function of this member is to close the beverage outlet during the steps there is a risk the beverage unexpectedly overflows, in particular during mixing operation or during travelling. On the contrary, the member enables the beverage outlet opening during drinking. Preferably, this member closes and opens the second opening simultaneously if this second opening is present.

In the method for preparing a cold beverage with the above apparatus the lid comprises at least one piece of ice extending from the lower surface of the lid.
Since the piece of ice extends from the lower surface of the lid, once at least one liquid beverage ingredient is introduced in the container body and the container is closed with said lid, then the piece of ice extends in the internal volume of the container body, and depending on the volume of liquid present in the container body, dives in said liquid.
Preferably the piece of ice extends longitudinally inside the container body as low as possible close to the floor. As a result, the part of the of piece of ice close to the floor become fully covered by the swirl of liquid, the latter being thicker at the bottom of the container than at the top.
In addition, the piece of ice extends from the lower surface of the lid at a position out of the longitudinal axis of rotation. As a result, the piece of ice is distant from this axis and, during rotation of the liquid, becomes covered by the swirl of beverage. Preferably, the piece of ice is positioned closer to the lateral side of the container body than to the longitudinal axis of rotation. Consequently, when the mixing device of the apparatus is actuated, an important part of the surfaces of the piece of ice can be covered by the swirl of liquid. In addition, the speed of the liquid being greater at the farthest distance from the axis of rotation of the mixing device, this position of the piece of ice increases thermal exchange and the melting speed.
While the mixing device is rotated in the liquid, the piece of ice chills the beverage in preparation. Simultaneously the piece of ice melts and provides additional liquid for the beverage preparation. At the end of the preparation, the temperature of the beverage is colder than the temperature of the liquid introduced in the container.

According to one first preferred embodiment, the piece of ice can extend transversely along a part of the sidewall of the container body. As a result, the piece of ice extends partially only along the internal lateral surface of the container body.
Preferably the transversal section of the piece of ice presents a curved shape. Preferably, the shape of the external side of the piece of ice follows the outline of the internal sidewall of the container body. Usually the internal sidewall of the container body is circular and the shape of the external side of the piece of ice is an arc.
Preferably, the piece of ice presents a shape globally aligned with the streamlines of the swirl of liquid formed by the rotating mixing device in the container body. In particular, the transversal cross section of the piece of ice can present the shape of a wing with an external side presenting an upper camber (extrados) of lower radius of curvature than the lower camber (intrados) of the internal side. Such a shape enables rotating liquid to follow and stick to the sides of the piece of ice. It prevents the swirl of liquid from detaching from the piece of ice and from producing vortices or turbulences along the piece ice. Such vortices would decrease the efficiency of the thermal exchange between the ice and the liquid.

In a particular mode of this first preferred embodiment, the lid can comprise several pieces of ice extending from the lower surface of the lid.
Dividing the pieces of ice present the advantage of increasing the surfaces of contact between the ice and the liquid and improving the thermal exchange.
Preferably the lid can comprise two or three pieces of ice.

The pieces of ice can be positioned close one to the other along the outline of the container body so that the velocity of the liquid is increased one piece after one piece.
Alternatively, only two pieces of ice can be provided and positioned at diametrically opposed positions at the lid.

According to one second embodiment, the piece of ice extends transversely along the full internal contour of the sidewall of the container body.
According to this embodiment, the piece of ice can be a tube of ice. This tube of ice extends downwards from the lid and acts as a lateral sidewall of ice inside the container body. As a result, when the mixing device of the apparatus is actuated, the liquid swirls along this lateral wall of ice.

In the above method, first, at least one liquid beverage ingredient is introduced in the container body of the apparatus.
According to one first embodiment, the at least one liquid beverage ingredient is a beverage that needs to be cooled. It is preferably an aqueous beverage. As a result ice can melt inside and can produce a light dilution of the beverage without affecting too much the strength of the taste of the beverage. For example, the liquid beverage ingredient can be a beverage issued from brewing like coffee, tea, or it can be a juice. The coffee can be cold brewed coffee. The tea can be tea at ambient temperature that needs to be iced.
According to one second embodiment, the at least one liquid beverage ingredient is an aqueous liquid diluent and the method comprises the step of introducing at least one soluble beverage ingredient with said liquid in the container body.
Preferably, the aqueous liquid diluent is water and/or milk.
Preferably, the soluble beverage ingredient is a soluble beverage powder or a beverage concentrate. The soluble beverage powder can be instant coffee powder, 3-in-1 coffee mixes, milk powder, instant tea powder, chocolate powder and/or soup powder. The beverage concentrate can be coffee concentrate, tea concentrate, chocolate concentrate and/or syrups.

Generally the at least one piece of ice extending from the lower surface of the lid is frozen water.
According to one alternative, this at least one piece of ice can be frozen flavoured water. As a result, the piece of ice can cool and flavour the liquid present in the apparatus. For example cold beverage can be produced with flavours such as vanilla, nut, almond, amaretto, Irish cream, orange leaf, peach, and the like.

According to another alternative, this at least one piece of ice can be frozen beverage concentrate. As a result, water at ambient temperature can be introduced in the apparatus and the beverage can be prepared through melting and dilution of the frozen concentrate in the swirl of water. The frozen concentrate can be coffee concentrate, tea concentrate, chocolate concentrate and/or syrups.

Then, the container is closed with the lid comprising the at least one piece of ice and then the motor is actuated to rotate the mixing device.
The mixing of the liquid induces the melting of the piece of ice resulting in the production of a cold beverage and the dissolution of the soluble beverage ingredient in the liquid if introduced in the apparatus. Mixing occurs until the ice has melt and the soluble beverage ingredient is dissolved and eventually the beverage is frothed.
Depending on the nature of the beverage ingredients and/or the speed of rotation of the mixing device, the beverage can be frothed simultaneously. Since the piece of ice is positioned out of the axis of rotation of the mixing device, the production of the swirl is not prevented and air is able to be mixed with the liquid at the centre of the swirl, which produces froth simultaneously to mixing and cooling.

According to a **second aspect**, there is provided an assembly of:
- a mould, and
- a removable lid of an apparatus for mixing, storing and drinking a beverage, said apparatus comprising :
   - a container body, said container body comprising a floor and a sidewall extending upwardly and longitudinally from the floor to an upper edge, and
   - a rotatable mixing device positioned at the floor of the container body,
   said removable lid cooperating with the upper edge of the container body and closing said container,
   wherein said lid comprises at least one longitudinal shaft extending from the lower surface of the lid at a position close to the lateral edge of the lid, and
   wherein the mould and the lid comprises cooperating means to attach the mould to the removable lid and around the at least one longitudinal shaft.

The removable lid of the assembly corresponds to the lid of the apparatus for mixing, storing and drinking a beverage such as described above.
The mould is a container designed to mould a shape of ice from water introduced and frozen in this container.

The assembly of this lid with the mould enables the preparation of a piece of ice at the lower surface of the lid in order to implement the method for preparing a beverage according to the first aspect.
The lid comprises a longitudinal shaft extending from its lower surface at a position out of the centre of the lid and the lid comprises attaching means configured to cooperate with corresponding attaching means of the mould so that the mould is removably attached to the lower surface of the lid. The attaching means are positioned in order to attach the mould to the removable lid and around the longitudinal shaft. As a result, the mould defines a moulding volume around the longitudinal shaft and a piece of ice can be produced around the shaft and attached to the shaft.

Any type of means to attach the mould to the removable lid can be used such as screw means, bayonet type means, snap-fitting means.

The shaft defines the position where a piece of ice is able to be moulded at the lower surface of the lid. The shaft extends from the lower surface of the lid at a position close to the lateral edge of the lid. As a result the longitudinal shaft of the lid is positioned closer to the lateral edge of the lid than to the centre of the lid.

Preferably the mould presents a shape such that the resulting moulded piece of ice presents a surface extending longitudinally from the lid and at a point close the edge of the lid. As a result, the piece of ice produced by the mould presents a longitudinal surface positioned close to the edge of the lid and close to the lateral wall of the container body when the lid is attached to the apparatus.

According to the first preferred embodiment, the mould presents a shape configured to produce at least one piece of ice, said piece of ice extending transversely along a part of the lateral edge of the lid.
Preferably the mould presents a shape configured to produce a piece of ice, the transversal section of the mould presenting a curved shape.
Preferably, the transversal cross section of the mould can present the shape of a wing with an external side presenting an upper camber (extrados) of lower radius of curvature than the lower camber (intrados) of the internal side.

According to the second embodiment, the mould presents a shape configured to produce a piece of ice, said piece of ice extending transversely along the full contour of the lateral edge of the lid. Preferably, the piece of ice is a tube of ice extending downwardly from the lid. Accordingly, the mould can be a tube, the lower first end of the tube being closed and the upper second end of the tube being opened and comprising the cooperating means to attach the mould to the removable lid and around the at least one longitudinal shaft. Preferably the thickness of the tube of the mould decreases from the top to the bottom in order to facilitate the unmoulding of the piece of ice from the mould.
According to this second embodiment, the lid can comprise several longitudinal shafts extending from its lower surface at a position out of the centre of the lid. The presence of these different shafts enable a better anchorage of the tube of ice at the lid.

Preferably the mould is made of a flexible and resilient material. By flexible and resilient, it is meant a material that can be deformed for a moment and can retrieve its original shape even at low temperature. Accordingly, it becomes easier for the user to remove the piece of ice from the mould. The material can be a soft plastic like a silicone plastic.

Preferably, the lid, its longitudinal shaft and its attaching means cooperating with the mould are formed of one single piece of material.

In a less preferred mode, the longitudinal shaft extending from the lower surface of the lid and the attaching means of the lid cooperating with the mould form one single piece of material, and said piece is removably attached to the lid.
According to this embodiment, the lid can be used either with the longitudinal shaft - and implicitly the piece of ice - attached thereto or without the longitudinal shaft, for example for the preparation of a hot beverage in the apparatus.

Usually, the lid comprises one first opening drinking aperture configured as a beverage outlet.
Preferably the lid can comprise one second opening configured as an air port.
Usually, the lid comprises a member configured for closing or opening the first opening and movable between a first closing position and a second opening position. Preferably, this member closes and opens the second opening simultaneously if this second opening is present.

In a **third** aspect, there is provided a method for producing a removable lid comprising a piece of ice extending from the lower surface of said lid with the assembly such as described above, said method comprising the steps of:
a) filling the mould with water,
b) attaching the mould to the removable lid,
b) freezing water in the mould,
c) separating the mould from the removable lid.

According to one particular embodiment, the mould can be filled with flavoured water or a liquid beverage concentrate. As a result, the piece of ice can be used to cool and to flavour a liquid beverage present or prepared in the apparatus for mixing, storing and drinking.

In a **fourth** aspect, there is provided a system of:
- an apparatus for mixing, storing and drinking a beverage, said apparatus comprising :
   - a container body, said container body comprising a floor and a sidewall extending upwardly and longitudinally from the floor to an upper edge,
   - a rotatable mixing device positioned at the floor of the container body,
   - a motor cooperating with the mixing device through the floor of the container body in order to rotate the mixing device around a longitudinal axis XX',
   - a removable lid cooperating with the upper edge of the container body and closing said container,
      and
- at least one piece of ice moulded around a longitudinal shaft, one first end of the longitudinal shaft extending out of the piece of ice,
wherein said first end of the longitudinal shaft and said lid of the apparatus comprise cooperating means to attach the at least one piece of ice to the lower surface of the lid at a position close to the lateral edge of the lid.

The apparatus of the system enables the mixing of a beverage liquid inside the container body and drinking therefrom. The container body and mixing device of the apparatus presents the same features as the apparatus described above. As far as the removable lid of the apparatus is concerned, this lid is provided at its lower surface with means configured to removably attach the end of a shaft directly or indirectly thereto.
The piece of ice of the system is moulded around a longitudinal shaft, one first end of the longitudinal shaft extending out of the piece of ice. This first end of the longitudinal shaft is configured to cooperate directly or indirectly with the attaching means at the lower surface of the lid of the apparatus.
Direct cooperation relates to the attachment of the end of the shaft to the lid. These removably attaching and corresponding means can be screwing means, snap-fitting means, bayonet type means, corresponding slots and bumps means or any other similar removably attaching means.

Indirect cooperation relates to the attachment of the end of the shaft to an intermediate piece of material, said piece being removably attachable to the lid. This intermediate piece of material can be a plate provided at the first end of the shaft and transversely extending therefrom. This intermediate piece comprises the means for removably attaching the first end of the shaft to the lid of the apparatus. Similarly, these means can be screwing means, snap-fitting means, bayonet type means, corresponding slots and bumps means or any other similar removably attaching means.
The attaching means at the bottom surface of the lid is at a position close to the lateral edge of the lid. As a result the shaft and the piece of ice extends close to the lateral edge of the lid and, when the lid closes the container body of the apparatus, the piece of ice extends close to the sidewall of the container body.

In a **fifth aspect**, there is provided a piece of ice moulded around a longitudinal shaft, one first end of the longitudinal shaft extending out of the piece of ice, wherein said first end of the longitudinal shaft comprises means to attach the piece of ice to the lower surface of the removable lid of the container body of an apparatus for mixing, storing and drinking a beverage.

Preferably, the transversal cross section of the piece of ice presents the shape of a wing with an external side presenting an upper camber (extrados) of lower radius of curvature than the lower camber (intrados) of the internal side.

Preferably the shaft is made of a disposable material. Accordingly the shaft can be thrown away after the use of the piece of ice to cool the beverage.

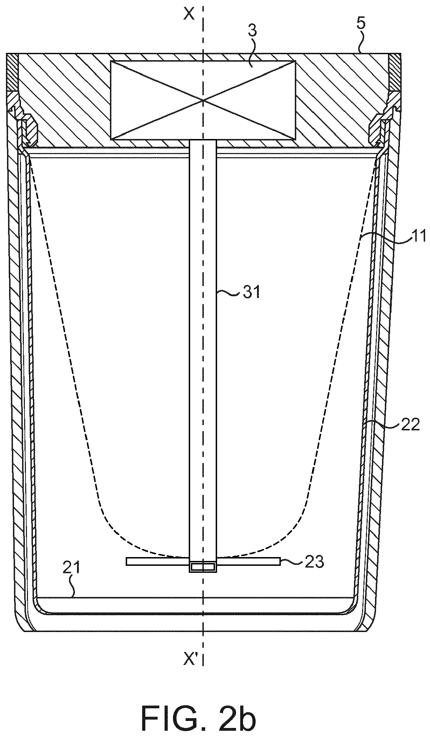

In the present application the terms "internal", "lateral", "top", "bottom", "upper", "external", "lower" and "downwardly" are used to describe the relational positioning of features of the invention. These terms should be understood to refer to the container in its normal orientation for the production of a beverage as shown in the figures 2b, 2c, 7, 8a and 8b.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

The characteristics and advantages of the invention will be better understood in relation to the following figures :
- Figure 1 is a perspective view of an apparatus for mixing, storing and drinking a beverage such as used in the present invention,
- Figure 2a is a vertical cross section view of the apparatus of Figure 1, the lid having been removed,
- Figure 2b is a vertical cross section view of an alternative apparatus,
- Figures 2c and 2d are two lateral views of the apparatus of Figure 1 wherein the container has been made transparent,
   Figure 2e is a cross-sectional view of the apparatus of Figure 2b as taken along plane AA,
- Figures 3a and 3b are perspective views of the assembly of the lid and the mould according to the second aspect of the invention,
- Figure 4 is a perspective view of the lid of the assembly of Figures 3a and 3b,
- Figure 5 is a perspective view of the mould of the assembly of Figures 3a and 3b,
- Figure 6 is a perspective view of the lid of the assembly of Figures 3a and 3b with a moulded piece of ice,
- Figure 7 is a view of the use of an assembly of a mould and removable lid according to a specific mode,
- Figures 8a, 8b and 8c illustrate the system of an apparatus and piece of ice according to the fifth aspect of the invention.

### Detailed description of the drawings

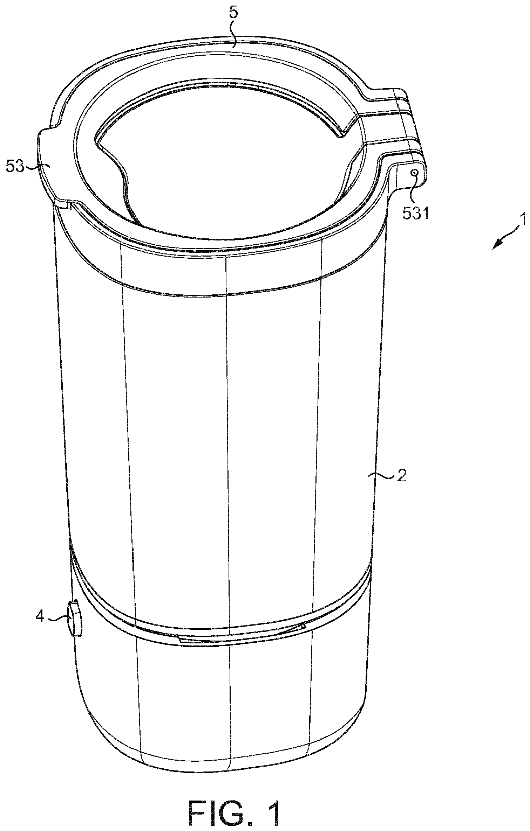

**Figure 1** illustrates an apparatus 1 for mixing, storing and drinking a beverage used in the present invention. The apparatus is configured for preparing a beverage and storing this beverage. Preferably the apparatus is configured for being transported in order to enable the consumer to drink on the go while travelling.
The apparatus comprises a container body 2 to store the beverage. Generally this container body is made of an insulated material in order to keep the beverage at the desired temperature. Usually, the apparatus is non disposable.
The apparatus comprises a lid 5 to close the container body 2. This lid closes the apparatus and is configured for enabling the consumer to drink therethrough. Accordingly the lid comprises an opening for drinking. In Figure 1, this opening is closed by a movable member 53. This movable member is attached by a hinge 531 to the lid.
The apparatus comprises a button 4 to initiate the preparation of a beverage inside the apparatus.

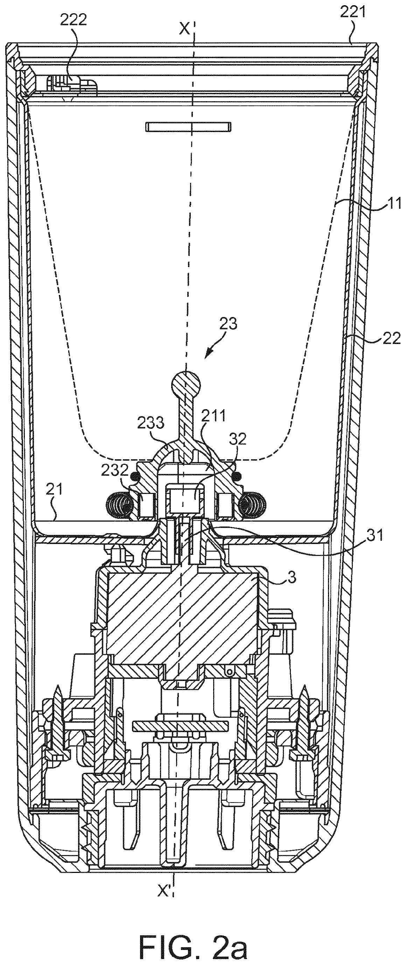

**Figure 2a** illustrates the inside of the apparatus 1. Usually, the container body presents a circular internal cross section. At its bottom, the container body 2 comprises a floor 21. The sidewall 22 extends therefrom upwardly and longitudinally to the upper edge 221. At this edge, the container comprises means to cooperate with the lid and attach the lid to the container body. In the illustrated embodiment the top of the container comprises raised parts 222 able to engage with slots on the lid.
As illustrated, the apparatus 1 comprises a mixing device 23 within the container body 2. Preferably, and as illustrated, the mixing device 23 is positioned at or close to the floor 21 of the container body. The mixing device is rotated around the axis XX' which corresponds here to the longitudinal axis of the container body. As a result, during rotation, beverage rotates in the container body and swirls along the sidewall 22 of the container body. This swirl 11 of beverage illustrated in dotted line.
The mixing device can be a blade, a whisk, a whipper, a stirrer or any other device that can be rotated for agitate a beverage. In the illustrated embodiment, the mixing device 23 comprises a toroidaly-shaped wire 231.
In the less preferred embodiment, the mixing device 23 can be directly attached to the shaft of a rotating motor extending through the floor 21 of the container body.
Yet, as illustrated in Figure 2a, in the preferred embodiment, the apparatus 1 comprises magnetic drive means providing indirect coupling with the mixing device. The drive means comprises a motor 3 positioned under the floor 21 and actuating the rotation a shaft 31. The shaft extends along the longitudinal axis XX'. The end of the shaft comprises two elements 32 made of ferro-magnetic material. As a result, the rotation of the shaft induces a rotary magnetic field. The mixing device 23 comprises two elements 232 made of ferro-magnetic material. These elements are slaved to the magnetic field induced by the rotation of the shaft. The floor comprises a positioning means 211 configured to removably engage with a corresponding connecting means 233 of the mixing device. The positioning means 211 is a bump raising from the surface of the floor. On the other side of the surface of the floor, this bump comprises the end of the shaft of the motor.
On the side of the mixing device 23, the connecting means is a recess 233 at the centre of the mixing device designed to fit and surround the bump.
The positioning means 211 has a shape complementing the connecting means 233 so as to accept the latter in rotational engagement.

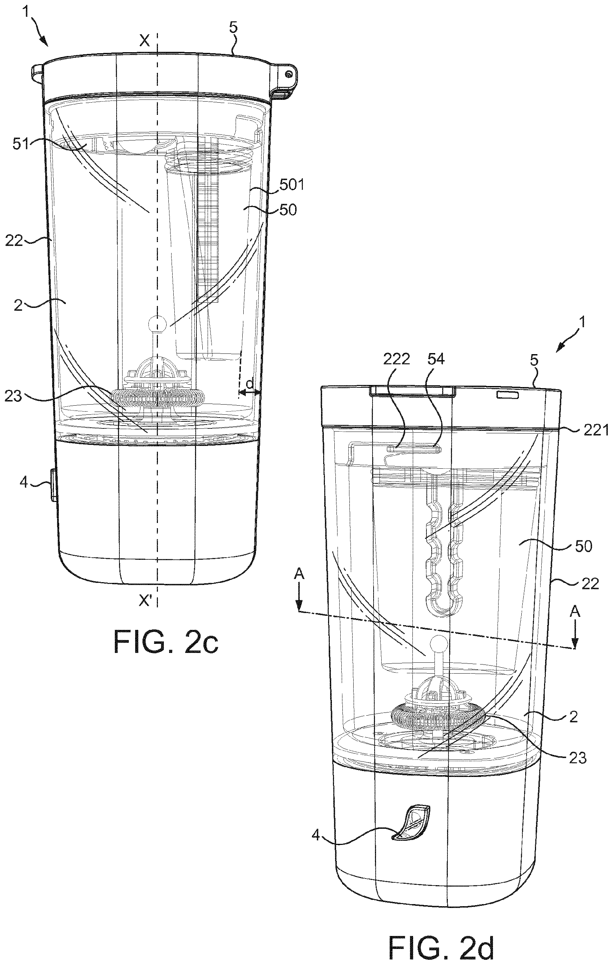

**Figure 2c** illustrates and alternative embodiment of the apparatus 1, wherein the motor 3 is provided in the lid 5 of the apparatus 1. The shaft of the motor extends downwardly inside the container body 2 and along a longitudinal central axis XX' corresponding to the central longitudinal axis of the container too. A blade 23 is attached at the end of the shaft close to the floor 21 of the container. Accordingly, when a liquid is present in the container body and the mixing device 23 rotates, liquid rotates in the container body and swirls along the sidewall 22 of the container body. This swirl 11 of beverage illustrated in dotted line.

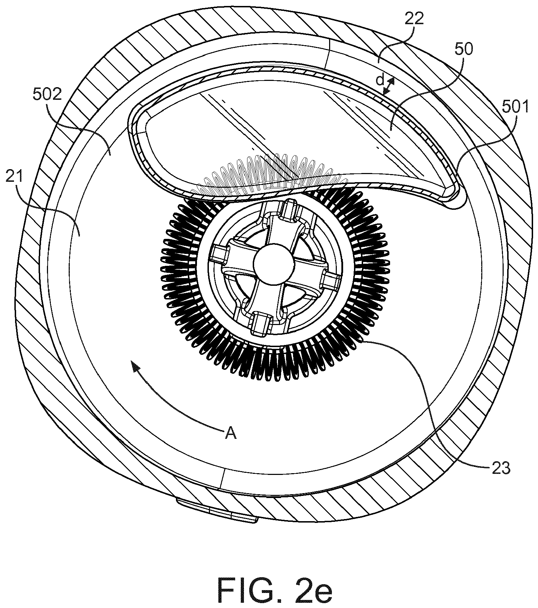

In **Figures 2c and 2d**, the container body of the apparatus 1 of Figure 1 has been made transparent. In these figures, the same apparatus is viewed according to different angles.
A piece of ice 50 is attached at the bottom surface 51 of the lid and extends inside the volume of the container body 2.
This piece of ice extends longitudinally inside the container body 22. Preferably the piece of ice is shaped to extend longitudinally in the container as low as possible. The limit is to avoid any contact with the mixing device. This long longitudinal shape provides an important surface for thermal exchange and speeds up the cooling operation.
This piece of ice 50 extends from the lid inside the container body at a position that is out of the centre of the lid, and accordingly out of the axis XX' of rotation of the mixing device, that is close to the lateral sidewall of the container. Due to this position, the piece of ice is covered by the swirl of beverage when the mixing device rotates.
Preferably, the piece of ice extends close to the lateral wall 22 of the container body. As illustrated in Figure 2e, the distance d between the surfaces of the lateral wall 22 and the external lateral side 501 of the piece of ice is set so as to enable the swirl of liquid in the apparatus to slide between these both surfaces while remaining as small as possible. Preferably, the distance d can be of about 1 mm. Since the speed of the flow of swirling beverage is higher close to the lateral wall 22 of the container, the thermal exchange between the beverage to be cooled and the piece of ice is increased in this area and the cooling operation is efficient and rapid.
The piece of ice 50 extends transversely along a part only of the sidewall of the container body. In the illustrated embodiment, the piece of ice extends along about a third of the transversal circumference of the container body (see Figure 2d). Again this large surface increases the thermal exchange. This design presents the advantage of enabling an easy unmoulding of the frozen shape from the mould since it is rather compact.
Preferably, the piece of ice 50 is shaped to present an aerodynamic design that does not disturb the swirl of beverage. **Figure 2e** illustrates the cross section of the piece of ice illustrated in Figures 2c and 2d. Globally the transversal section of the piece of ice presents a curved shape.
In particular, the shape of the external side of the piece of ice follows the outline of the internal sidewall of the container body. Since the internal sidewall of the container body is circular, the shape of the external side of the piece of ice is preferably an arc.

Preferably, the transversal cross section of the piece of ice presents the shape of a wing with an external side presenting an upper camber (extrados) of lower radius of curvature than the lower camber (intrados) of the inner side. Such a shape enables liquid to follow and stick to the sides of the piece of ice. It prevents the swirl of liquid from detaching from the piece of ice and producing vortexes or turbulences along the piece ice. Such vortexes would decrease the efficiency of the thermal exchange between the ice and the liquid.
This shape of ice is oriented in the swirl of liquid so that the more thick and rounded end 502 of the piece of ice faces the swirl of beverage (arrow A illustrates the direction of rotation of the swirl).

In order to prepare a cold beverage with the apparatus described in Figures 2c and 2d, the following steps are implemented.
First, a liquid, such as water at ambient temperature, and a soluble beverage ingredient, such as instant coffee, are introduced in the container 2. Usually, a maximum filling level indicator is drawn on the side wall of the container body to help the user and to prevent an overflow of liquid when the piece of ice is introduced in the liquid.
Then, the lid 5 is attached to the container body and as a result the piece of ice 50 dips in the liquid.
Then the button 4 is pushed to actuate the rotation of the mixing device until the beverage is dissolved and the ice has melt. The rotation enables the mixing of the ingredients, the dissolution of coffee in water and the cooling of the resulting coffee beverage. Frothing of the beverage can also be obtained.

The volume of the piece of ice is usually set in order to reach a cold temperature inferior to 10°C, preferably less than 8°C, even more preferably less than 6°C starting from a liquid introduced at ambient temperature inside the container body.
As an example, 100 ml of water at 23°C and 3 g of instant coffee agitated with a piece of ice of 80 ml frozen at -10°C produced a coffee beverage at a temperature of 8°C in 1 min.

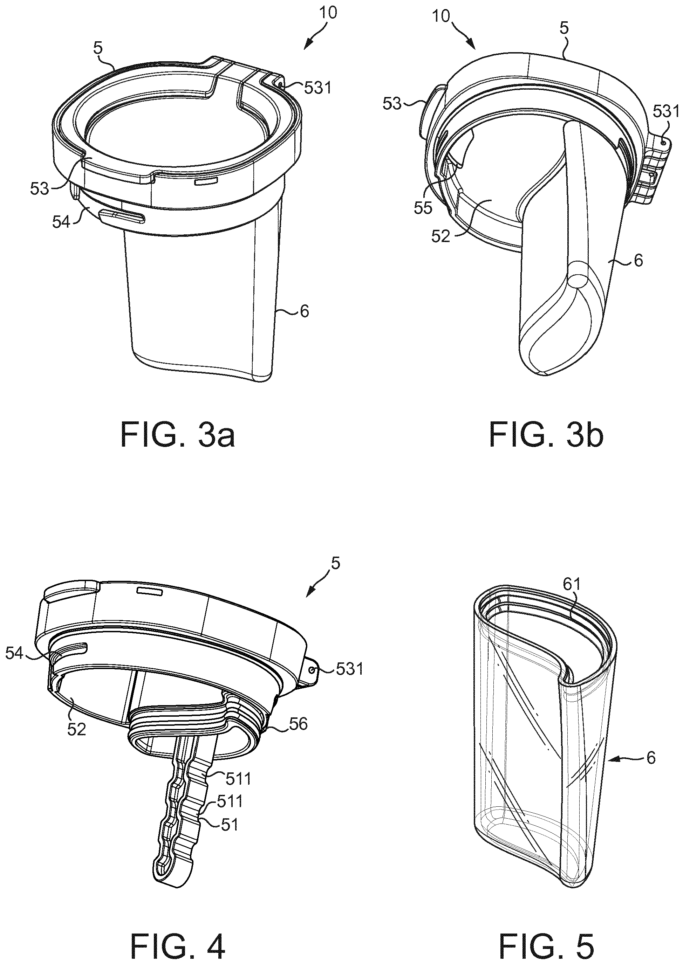

**Figures 3a and 3b** illustrate the assembly 10 of the lid 5 and the mould 6 enabling the preparation of a removable lid with a piece of ice attached thereto.
At its upper side, illustrated in Figure 3a, the lid comprises a member 53 configured for closing or opening the drinking opening 55 illustrated in Figure 3b. This member is a plate movable between two positions : here it is represented in its first closing position. This member is attached to the lid by a hinge 531.

At the lower side 52 of the lid, a mould 6 is attached. The mould extends perpendicularly to the surface of the lid and from a point out of the centre of the lid. The mould extends close to the lateral edge of the lid.

**Figure 4** is a perspective view of the lid 5 of the assembly of Figures 3a and 3b alone. The lid 5 comprises a longitudinal shaft 51 extending from its lower surface 52. The lid comprises means 56 to attach the mould to the removable lid and around the longitudinal shaft 51. In the illustrated embodiment these means 56 are raising lines designed to cooperate by snap fitting with corresponding lines 61 of the mould (Figure 5).
The rod 51 presents several indentations 511. As a result, the piece of ice is well anchored on the rod, and, when the mould is separated form the piece of ice, said piece of ice remains well anchored on the lid. In addition, while a cold beverage is being prepared, the piece of ice remains attached to the rod until it is almost fully melted.

**Figure 5** is perspective view of the mould 6 of the assembly of Figures 3a and 3b. At its top, the mould presents raising lines 61 designed to cooperate by snap fitting with the corresponding lines 56 of the lid. The mould is designed to provide the desired shape to the piece of ice, in particular the aerodynamic design illustrated above.

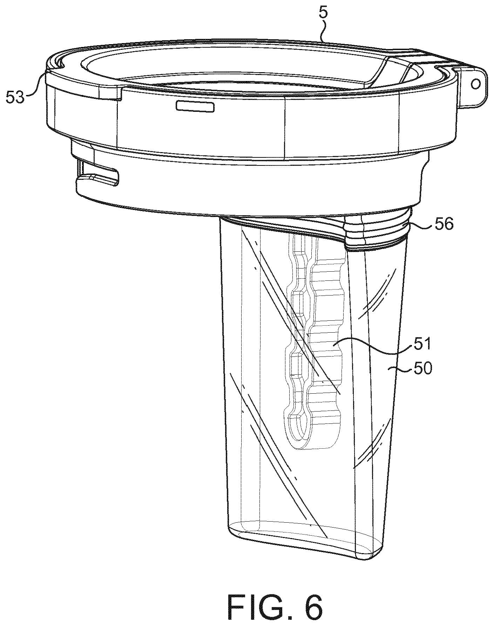

**Figure 6** is a perspective view of the lid of the assembly of Figures 3a and 3b with a moulded piece of ice 50 attached thereto.
This lid was obtained by filling the mould 6 with water or a liquid beverage concentrate and by attaching the filled mould to the lid 5 by snap-fitting. Then the assembly 10 of the mould and the lid was introduced in a freezer. Once water froze in the mould, the assembly 10 was removed from the freezer and the mould was separated from the lid. The piece of ice remained attached to the lid. The lid can be used to prepare a cold beverage as illustrated in Figure 2c and 2d.

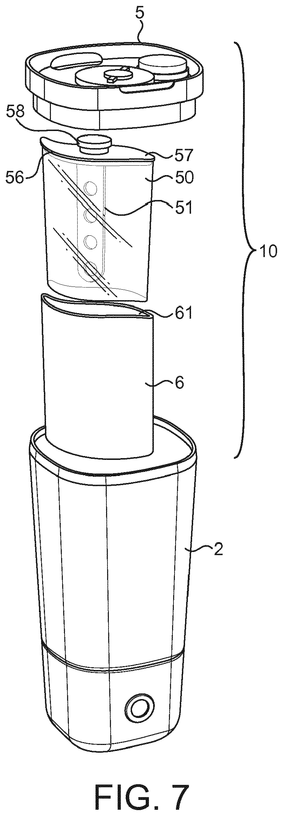

**Figure 7** is a view of the use of an assembly 10 of a mould 6 and a removable lid 5 according to a specific mode.
The longitudinal shaft 51 extends from a plate 56 and forms one single piece of material with said plate. The edge of this plate 56 is designed to provide attaching means 56 able to cooperate with the attaching means 61 at the edge of the mould 6. As a result the shaft 51, the plate 57 and the attaching means 56 form one single piece of material.
The plate 57 comprises additional attaching means 58 on its side opposed to the side the shaft extends from. This additional means 58 is designed to cooperate with corresponding attaching means at the lower surface of the lid in order to attach the plate 57 to the lid 5.

The mould 6 and the plate 57 enables the preparation of a piece of ice by simply filling the mould 6 with water, closing the mould with the plate 57 and placing the resulting assembly in the freezer. Once the water has frozen, this assembly can be removed from the freezer and the mould can be detached from the plate 57 in order to provide the piece of ice frozen around the shaft 51. Then this piece of ice can be attached to the lid 5 by means of the attaching means 58 of the plate. Then the lid with the piece of ice attached thereto can be used to prepare a beverage as illustrated in Figures 2c and 2d.
An advantage of this mode is that it is not necessary to supply the apparatus with different lids that is one to prepare ambient or hot beverages and another one to prepare cold beverages. The same lid can be used for all types of beverages and depending on the type of preparation, the piece of ice can be attached thereto.
Another advantage is that it is easy to supply several assemblies of moulds 6 and plates 57 to prepare and store several pieces of ice in the freezer for successive preparations of cold beverages.

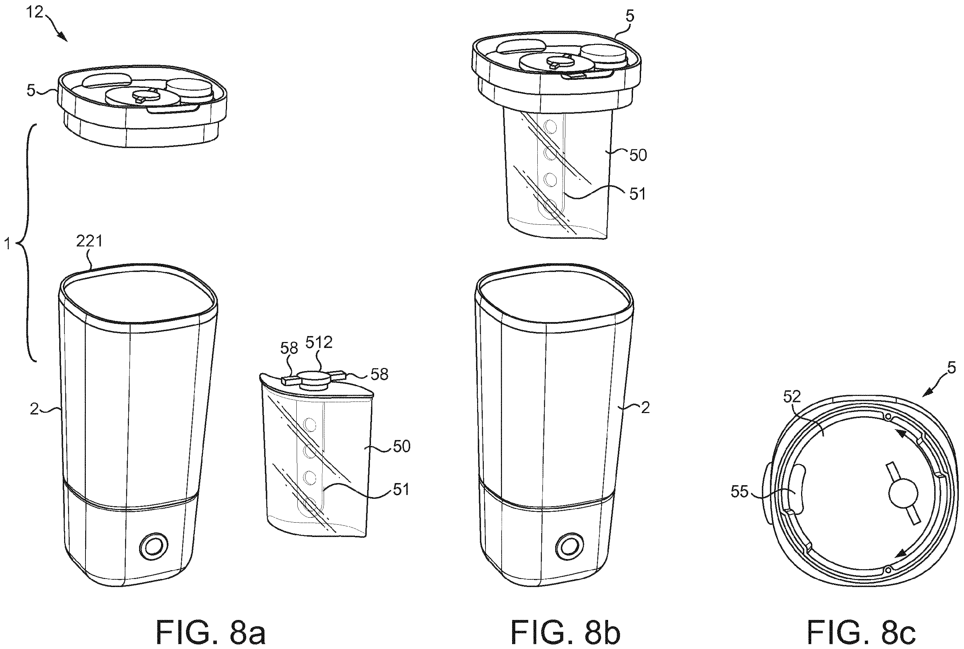

**Figure 8a** illustrates a system 12 of and apparatus 1 and a piece of ice 50.
The apparatus 1 present the same feature as the apparatus for mixing, storing and drinking a beverage described in above Figure 2a in particular this apparatus comprises the container body 2, the rotatable mixing device and the motor cooperating with the mixing device through the floor of the container body in order to rotate the mixing device around a longitudinal axis XX'. The apparatus comprises a removable lid 5 cooperating with the upper edge 221 of the container body and closing said container. In Figure 8a, the lid has been removed from the container 2.
The piece of ice 50 is moulded around the shaft 51 and extends longitudinally around said shaft. Preferably the transversal cross section of the piece of ice presents the shape of a wing with an external side presenting an upper camber (extrados) of lower radius of curvature than the lower camber (intrados) of the internal side.
One end 512 of the shaft is not covered by ice and extends out of the piece of ice. This end 512 comprises bars 58 extending transversely to the shaft and designed to act as a bayonet attachment means to the bottom surface of the lid.
**Figure 8c** shows the bottom surface 5 of the lid and illustrates the corresponding attaching means 59, that is slots in which the arms 58 of the rod are able to engage and slide in rotation to attach the shaft to the lid. This attaching means 59 at the bottom surface of the lid positions the piece of ice close to the edge of the lid.
In a particular embodiment (not illustrated), the bottom surface of the lid can comprise several attaching means in order to attach several pieces of ice to the lid.

**Figure 8b** shows the lid with the piece of ice attached thereto and ready to be introduced in the container body 2.
With the illustrated system, a consumer is able to store a plurality of pieces of ice 50 in the freezer. The pieces of ice can be frozen water or frozen flavoured water or frozen beverage concentrate. The pieces of ice sans be wrapped in disposable packaging. When the consumer desires to prepare a cold beverage with the mixing apparatus, he/she introduces the beverage ingredient in the container body, attaches a piece of ice 50 to the removable lid 5 by attaching the end of the shaft 512 to the bottom surface 52 of the lid, then he/she closes the apparatus with the lid and then he/she switches on the mixing device of the apparatus. The cold beverage is prepared and can be drunk from the apparatus itself through the opening 55 in the lid. After drinking the shaft can be detached from the lid and thrown away.

Although the invention has been described with reference to the above illustrated embodiments, it will be appreciated that the invention as claimed is not limited in any way by these illustrated embodiments.
Variations and modifications may be made without departing from the scope of the invention as defined in the claims. Furthermore, where known equivalents exist to specific features, such equivalents are incorporated as if specifically referred in this specification.
As used in this specification, the words "comprises", "comprising", and similar words, are not to be interpreted in an exclusive or exhaustive sense. In other words, they are intended to mean "including, but not limited to".

**List of references in the drawings :**

| | |
|---|---|
| apparatus | 1 |
| container body | 2 |
| floor | 21 |
| positioning means | 211 |
| sidewall | 22 |
| upper edge | 221 |
| raised part | 222 |
| mixing device | 23 |
| toroidal-shaped wire | 231 |
| ferro-magnetic element | 232 |
| connecting means | 233 |
| upper end part | 234 |
| motor | 3 |
| button | 4 |
| lid | 5 |
| piece of ice | 50 |
| external lateral side | 501 |
| shaft | 51 |
| indentation | 511 |
| first end | 512 |
| lower surface | 52 |
| movable member | 53 |
| hinge | 531 |
| slot | 54 |
| hole | 55 |
| attaching means | 56, 58, 59 |
| plate | 57 |
| mould | 6 |
| attaching means | 61 |
| assembly | 10 |
| swirl of beverage | 11 |
| system | 12 |

## Claims

1. Method for preparing a cold beverage with an apparatus (1) for mixing, storing and drinking a beverage, said apparatus comprising :
- a container body (2), comprising a floor (21) and a sidewall (22) extending upwardly and longitudinally from the floor to an upper edge (221),
- a rotatable mixing device (23) positioned at the floor of the container body,
- a motor (3) cooperating with the mixing device (23) in order to rotate the mixing device around a longitudinal axis XX',
wherein the method comprises the step of :
- introducing at least one liquid beverage ingredient in the container body (2),
- providing a removable lid (5) configured for cooperating with the upper edge (221) of the container body and closing said container, said lid comprising at least one piece of ice (50) extending from the lower surface (51) of the lid,
- closing the container with said lid, the piece of ice extending from the lower surface of the lid inside the container body at a position out of the longitudinal axis XX',
- actuating the motor (3) to rotate the mixing device in the at least one liquid beverage ingredient.

2. Method according to any one of the precedent claims, wherein the mixing device creates a swirl of liquid (11) in the container body (2.)

3. Method according to any one of the precedent claims, wherein the piece of ice (50) is positioned closer to the lateral side of the container body than to the centre of the container body.

4. Method according to any one of the precedent claims, wherein the piece of ice extends transversely along a part of the sidewall (22) of the container body

5. Method according to the precedent claim, wherein the transversal section of the piece of ice presents a curved shape.

6. Method according to any one of the precedent claims, wherein the at least one liquid beverage ingredient is an aqueous liquid diluent and the method comprises the step of introducing at least one soluble beverage ingredient with said liquid in the container body (2).

7. Method according to the precedent claim, wherein :
- the aqueous liquid diluent is water and/or milk,
- the soluble beverage ingredient is a beverage powder or a beverage concentrate.

8. Method according to any one of the precedent claims, wherein the at least one piece of ice is frozen flavoured water or frozen liquid concentrate.

9. Assembly (10) of :
- a mould (6) and
- a removable lid (5) of an apparatus for mixing, storing and drinking a beverage, said apparatus (1) comprising :
. a container body (2), said container body comprising a floor (21) and a sidewall (22) extending upwardly and longitudinally from the floor to an upper edge (221), and
. a rotatable mixing device (23) positioned at the floor of the container body,
said removable lid cooperating with the upper edge (221) of the container body and closing said container,
wherein said lid (5) comprises at least one longitudinal shaft (51) extending from the lower surface (52) of the lid at a position close to the lateral edge of the lid, and
wherein the mould (6) and the lid (5) comprises cooperating means (61, 53) to attach the mould to the removable lid and around the at least one longitudinal shaft (51).

10. Assembly according to the precedent claim, wherein the mould (6) presents a shape configured to produce a piece of ice, said piece of ice extending transversely along a part of the lateral edge of the lid.

11. Assembly according to the precedent claim, wherein the mould presents a shape configured to produce a piece of ice, the transversal section of said piece of ice presenting a curved shape.

12. Assembly according to any one of Claims 9 to 11, wherein the longitudinal shaft extending from the lower surface of the lid and the means of the lid to attach the mould to the lid form one single piece of material, and said piece is removably attached to the lid.

13. Method for producing a removable lid (5) comprising a piece of ice extending from the lower surface of said lid with the assembly (10) of any one of Claims 9 to 12 comprising the steps of :
a) filling the mould (6) with water,
b) attaching the mould (6) to the removable lid (5),
c) freezing water in the mould,
d) separating the mould from the removable lid.

14. System (12) of :
- an apparatus (1) for mixing, storing and drinking a beverage, said apparatus comprising :
. a container body (2), said container body comprising a floor (21) and a sidewall (22) extending upwardly and longitudinally from the floor to an upper edge (221),
. a rotatable mixing device (23) positioned at the floor of the container body,
. a motor (3) cooperating with the mixing device (23) in order to rotate the mixing device around a longitudinal axis XX',
. a removable lid (5) cooperating with the upper edge (221) of the container body and closing said container,
and
- at least one piece of ice (50), said piece of ice being moulded around a longitudinal shaft (51), one first end (512) of the longitudinal shaft extending out of the piece of ice,
wherein said first end (512) of the longitudinal shaft and said lid (5) comprise cooperating means to attach the at least one piece of ice to the lower surface (52) of the lid at a position close to the lateral edge of the lid.

15. Piece of ice (50) moulded around a longitudinal shaft (51), one first end (512) of the longitudinal shaft extending out of the piece of ice, wherein said first end (512) of the longitudinal shaft comprises means (58) to attach the piece of ice to the lower surface (52) of the removable lid (5) of the container body of an apparatus for mixing, storing and drinking a beverage.
